# EUROPÄISCHE PATENTSCHRIFT

(11) **EP 1 312 936 B1**
(45) Veröffentlichungstag und Bekanntmachung des Hinweises auf die Patenterteilung: **20.08.2008**
(21) Anmeldenummer: 02025361.3
(22) Anmeldetag: 14.11.2002
(51) Int. Cl.: G01S 7/487

(54) **Optoelektronische Vorrichtung**
Opto-electronic device
Dispositif optoélectronique

(30) Priorität: 17.11.2001 DE 10156660
(43) Veröffentlichungstag der Anmeldung: 21.05.2003
(73) Patentinhaber: Leuze electronic GmbH + Co. KG, 73277 Owen/Teck (DE)
(72) Erfinder: Argast, Martin, 72584 Hülben (DE)
(74) Vertreter: Ruckh, Rainer Gerhard

(56) Entgegenhaltungen:
- EP-A- 0 569 686
- EP-A- 0 967 492
- WO-A-99/13293
- DE-C- 4 405 376
- US-A- 3 649 123

## Beschreibung

Die Erfindung betrifft eine optoelektronische Vorrichtung gemäß dem Oberbegriff des Anspruchs 1.

Eine derartige optoelektronische Vorrichtung ist aus der DE 44 05 376 C1 bekannt. Die optoelektronische Vorrichtung ist als Flächendistanzsensor ausgebildet und weist einen Sendelichtstrahlen emittierenden Sender und einen Empfangslichtstrahlen empfangenden Empfänger auf. Zur Ermittlung der Positionen von Objekten innerhalb eines flächigen Schutzfeldes werden die Sendelichtstrahlen über eine Ablenkeinheit abgelenkt, so dass diese periodisch das Schutzfeld überstreichen. Die von Objekten zurückreflektierten Empfangslichtstrahlen werden über die Ablenkeinheit zum Empfänger geführt. Zur Bestimmung der Positionen von Objekten innerhalb und gegebenenfalls auch außerhalb des Schutzfeldes wird fortlaufend die Ablenkposition der Sendelichtstrahlen erfasst. Dabei werden fortlaufend Distanzmessungen durchgeführt, wobei diese vorzugsweise nach dem Phasenmessprinzip erfolgt. Hierzu wird den Sendelichtstrahlen eine Amplitudenmodulation aufgeprägt. Aus der Phasendifferenz der modulierten Sendelichtstrahlen und der von einem Objekt zurückreflektierten gleichfalls modulierten Empfangslichtstrahlen wird die Objektdistanz ermittelt. Aus den so gewonnenen Distanzwerten sowie den aktuellen Ablenkpositionen der Ablenkeinheit und damit der Sendelichtstrahlen kann die Position des Objektes ermittelt werden.

Durch eine statistische Auswertung mehrerer Positionswerte können dabei insbesondere auch Objekte sicher erfasst werden, die dicht vor einer Wand oder dergleichen angeordnet sind.

Nachteilig hierbei ist jedoch, dass der Schaltungs- und Rechenzeitaufwand zur Ortung der Objekte relativ groß ist.

Der Erfindung liegt die Aufgabe zugrunde eine optoelektronische Vorrichtung der eingangs genannten Art derart auszubilden, dass mit geringem schaltungstechnischem Aufwand eine sichere Erfassung von Objekten innerhalb eines Schutzfeldes ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung zur Erfassung von Objekten innerhalb eines Schutzfeldes weist einen Sendelichtstrahlen emittierenden Sender, einen Empfangslichtstrahlen empfangenden Empfänger, eine Ablenkeinheit zur periodischen Ablenkung der Sendelichtstrahlen innerhalb des Schutzfeldes und eine Auswerteeinheit zur Generierung eines Objektfeststellungssignals in Abhängigkeit der Ausgangssignale des Empfängers auf. Die optoelektronische Vorrichtung umfasst weiterhin eine Modulationseinheit zur Modulation der Sendelichtstrahlen mit einer Modulationsfrequenz und eine Demodulationssignale generierende Demodulationseinheit zur Ermittlung der Phasendifferenzen der Sendelichtstrahlen und der Empfangslichtstrahlen. Die Modulation der Sendelichtstrahlen wird dabei zur Vorgabe der Schutzfeldgrenzen abhängig von den Ablenkpositionen der Sendelichtstrahlen eingestellt. Dadurch wird entlang der Schutzfeldgrenze jeweils eine bestimmte Phasendifferenz der Sendelichtstrahlen und der Empfangslichtstrahlen erhalten, wodurch wiederum ein vorgegebener Wert des in der Demodulationseinheit generierten Demodulationssignals erhalten wird. Zur Generierung eines Objektfeststellungssignals sind bei Eintritt eines Objektes in das Schutzfeld Änderungen der Demodulationssignale bezüglich der den Schutzfeldgrenzen entsprechenden Werte erfassbar.

Der Grundgedanke der Erfindung besteht darin, eine Objekterfassung innerhalb eines Schutzfeldes in Form einer Überprüfung von Verletzungen vorgegebener Schutzfeldgrenzen vorzunehmen.

Ein Eingriff eines Objektes wird dann durch Registrieren einer signifikanten Abweichung der aktuellen Demodulationssignale von den den Schutzfeldgrenzen entsprechenden Werten der Demodulationssignale erfasst.

Da innerhalb des Schutzfeldes vorzugsweise eine eindeutige Phasenbeziehung zwischen den Sendelichtstrahlen und Empfangslichtstrahlen vorliegt, kann mit dieser Auswertung eindeutig bestimmt werden, ob sich ein Objekt im Schutzfeld befindet oder nicht. Dementsprechend wird in der Auswerteeinheit der optoelektronischen Vorrichtung ein binäres Objektfeststellungssignal generiert, dessen Schaltzustände ein freies Schutzfeld oder einen Objekteingriff im Schutzfeld signalisieren.

Ein wesentlicher Vorteil der erfindungsgemäßen optoelektronischen Vorrichtung besteht darin, dass die Überprüfung der Verletzung von Schutzfeldgrenzen auf einfache Weise und mit geringem schaltungstechnischen Aufwand durchführbar ist und dennoch eine sichere Objekterfassung innerhalb des Schutzfeldes ermöglicht.

Insbesondere ist vorteilhaft, dass aufwendige Auswerteverfahren, wie sie bei einer Distanzbestimmung von Objekten innerhalb des Schutzfeldes notwendig wären, entfallen.

In einer besonders vorteilhaften Ausführungsform der Erfindung ist eine Schwellwerteinheit zur Überprüfung der Schutzfeldverletzungen vorgesehen.

In der Schwellwerteinheit wird wenigstens ein Schwellwert generiert, mittels dessen die Demodulationssignale bewertet werden.

Der Schwellwert ist so gewählt, dass dieser einen vorgegebenen Schaltabstand zu den den Schutzfeldgrenzen entsprechenden Werten der Demodulationssignale aufweist. Bei einer Schutzfeldverletzung in einem bestimmten Bereich des Schutzfeldes über- oder unterschreiten die entsprechenden aktuellen Werte der Demodulationssignale den Schwellwert, wodurch das Objektfeststellungssignal vom Schaltzustand "freies Schutzfeld" in den Schaltzustand "Objekteingriff im Schutzfeld" wechselt.

Um ein unnötiges Wechseln der Schaltzustände des Objektfeststellungssignals bei geringfügigen Schwankungen des Demodulationssignals zu vermeiden, werden in der Schwellwerteinheit vorzugsweise zwei eine Schalthysterese bildende Schwellwerte generiert.

Zur Einhaltung eines reproduzierbaren Schaltabstands zwischen dem oder den Schwellwerten einerseits und den den Schutzfeldgrenzen definierenden Demodulationssignalen andererseits wird vorzugsweise zyklisch eine Referenzmessung durchgeführt. Bei dieser Referenzmessung werden außerhalb des Schutzfeldes verlaufende Sendelichtstrahlen über ein Testobjekt zum Empfänger geführt. Die dabei erhaltenen Messwerte werden zur Referenzierung der die Modulationsfrequenz generierenden Modulationseinheit verwendet.

Besonders vorteilhaft erfolgt die Einstellung der in der Modulationseinheit generierten Modulationsfrequenz in Abhängigkeit der Ablenkposition der Sendelichtstrahlen derart, dass die die Schutzfeldgrenzen definierenden Werte der Demodulationssignale einer Phasenverschiebung der Sendelichtstrahlen und Empfangslichtstrahlen von etwa 90° entsprechen. Dadurch wird eine besonders hohe Nachweisempfindlichkeit bei der Ermittlung von Schutzfeldverletzungen erhalten.

In einer weiteren vorteilhaften Ausführungsform weist die optoelektronische Vorrichtung eine Ablenkeinheit auf, die von einem Schwingspiegel gebildet ist, über welchen nur die Sendelichtstrahlen gefährt werden. Die Empfangslichtstrahlen werden dagegen über eine stationäre Empfangsoptik zum Empfänger geführt. Diese Ausführungsform weist einen besonders einfachen und robusten Aufbau auf, wobei insbesondere vorteilhaft ist, dass der Justageaufwand zur Strahlführung der Sendelichtstrahlen und Empfangslichtstrahlen innerhalb der optoelektronischen Vorrichtung äußerst gering ist.

Die Erfindung wird im Nachstehenden anhand der Zeichnungen erläutert. Es zeigen:
- Figur 1:: Blockschaltbild eines Ausführungsbeispiels der optoelektronischen Vorrichtung zur Erfassung von Objekten innerhalb eines Schutzfeldes.
- Figur 2:: Darstellung eines von Schutzfeldgrenzen begrenzten, von der optoelektronischen Vorrichtung gemäß Figur 1 überwachten Schutzfeldes.
- Figur 3a:: Erstes Beispiel einer Vorgabe von Schutzfeldgrenzen eines Schutzfeldes.
- Figur 3b:: Eingangssignal der Modulationseinheit der optoelektronischen Vorrichtung zur Generierung der Schutzfeldgrenzen gemäß Figur 5a.
- Figur 4a:: Zweites Beispiel einer Vorgabe von Schutzfeldgrenzen eines Schutzfeldes.
- Figur 4b:: Eingangssignal der Modulationseinheit der optoelektronischen Vorrichtung zur Generierung der Schutzfeldgrenzen gemäß Figur 6a.
- Figur 5:: Schematische Darstellung eines typischen Verlaufs von in der optoelektronischen Vorrichtung generierten Demodulationssignalen sowie Schwellwerten zur Bewertung der Demodulationssignale.
- Figur 6:: Signalverlauf der mit den Schwellwerten digitalisierten Demodulationssiganle für die Anordnung gemäß Figur 2.
- Figur 7a:: Draufsicht auf ein erstes Ausführungsbeispiel von Optikkomponenten für die optoelektronische Vorrichtung gemäß Figur 1.
- Figur 7b:: Längsschnitt durch die Anordnung gemäß Figur 7a.
- Figur 7c:: Detaildarstellung eines Ausschnittes der Anordnung gemäß Figur 7b.

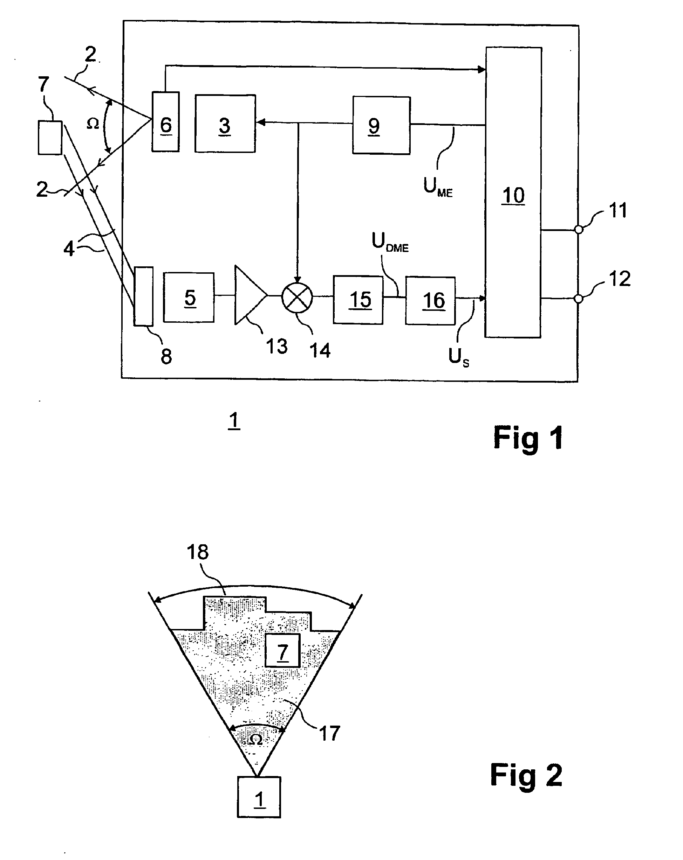

Figur 1 zeigt schematisch den Aufbau eines Ausführungsbeispiels der erfindungsgemäßen optoelektronischen Vorrichtung 1. Die optoelektronische Vorrichtung 1 weist einen Sendelichtstrahlen 2 emittierenden Sender 3 und einen Empfangslichtstrahlen 4 empfangenden Empfänger 5 auf. Der Sender 3 besteht vorzugsweise aus einer Laserdiode. Der Empfänger 5 besteht bevorzugt aus einer Photodiode.

Die optoelektronische Vorrichtung 1 weist eine Ablenkeinheit 6 auf, mittels derer die Sendelichtstrahlen 2 periodisch abgelenkt werden. Dadurch überstreichen die Sendelichtstrahlen 2 innerhalb eines vorgegebenen Scanwinkelbereichs Ω eine Abtastebene, wobei dieser einen Überwachungsbereich bildet.

Die Ablenkeinheit 6 besteht im vorliegenden Fall aus einem Schwingspiegel, wobei dieser vorteilhaft von einem mikromechanischen Microscanspiegel gebildet ist.

Wie aus Figur 1 ersichtlich werden die Sendelichtstrahlen 2, nicht jedoch die von Objekten 7 aus dem Überwachungsbereich zurückreflektierten Empfangslichtstrahlen 4 über die Ablenkeinheit 6 geführt. Die Empfangslichtstrahlen 4 werden über eine stationäre Empfangsoptik 8 zum Empfänger 5 geführt. Die Empfangsoptik 8 kann im einfachsten Fall von einer Linse gebildet sein. In jedem Fall ist die optische Fläche der Empfangsoptik 8 derart ausgebildet, dass Empfangslichtstrahlen 4 aus beliebigen Segmenten des Überwachungsbereichs über die Empfangsoptik 8 zum Empfänger 5 geführt sind.

Die optoelektronische Vorrichtung 1 weist eine Modulationseinheit 9 auf, mittels derer die Sendelichtstrahlen 2 mit einer vorgegebenen Modulationsfrequenz moduliert werden. Die Modulationseinheit 9 kann prinzipiell von einem Synthesizer gebildet sein. Im vorliegenden Fall besteht die Modulationseinheit 9 aus einem spannungsgeregelten Oszillator. Durch Variation der Eingangsspannung U_{ME} der Modulationseinheit 9 kann die dort generierte Modulationsfrequenz verändert werden. Hierzu wird die Modulationseinheit 9 vom einem Microcontroller 10 angesteuert, welcher zudem Bestandteil der Auswerteeinheit der optoelektronischen Vorrichtung 1 ist, und welche zur Auswertung der an dem Empfänger 5 anstehenden Ausgangssignale dient.

An den Microcontroller 10 ist ein Schaltausgang 11 zur Ausgabe eines Objektfeststellungssignals angeschlossen. Zudem ist an den Microcontroller 10 eine serielle Schnittstelle 12 angeschlossen, über welche die optoelektronische Vorrichtung 1 parametrierbar ist.

Die optoelektronische Vorrichtung 1 weist als Demodulationseinheit einen Synchrongleichrichter 14 auf. Die in einem breitbandigen Verstärker 13 verstärkten Ausgangssignale werden dem Synchrongleichrichter 14, der von der Modulationseinheit 9 getaktet ist, zugeführt. Die dort generierten Signale werden einem Tiefpass 15 zugeführt. Die am Ausgang des Tiefpasses 15 anstehenden Demodulationssignale U_{DME} liefern ein Maß für die Phasenverschiebung der Sendelichtstrahlen 2 und der Empfangslichtstrahlen 4.

Die Demodulationssignale U_{DME} werden schließlich einer Schwellwerteinheit 16 zugeführt, in welcher durch eine Schwellwertbewertung ein digitalisiertes Signal U_{S} generiert wird, welches in den Microcontroller 10 eingelesen wird.

Mit der optoelektronischen Vorrichtung 1 gemäß Figur 1 wird erfasst, ob sich ein Objekt 7 innerhalb eines vorgegebenen Schutzfelds 17 befindet. Ein derartiges Schutzfeld 17 ist in Figur 2 dargestellt. Das Schutzfeld 17 ist Teil des von den Sendelichtstrahlen 2 erfassten Überwachungsbereichs und ist durch Schutzfeldgrenzen 18 begrenzt.

Im vorliegenden Fall erstreckt sich das Schutzfeld 17 über den gesamten von den Sendelichtstrahlen 2 überstrichenen Scanwinkelbereich Ω. Zu großen Distanzen hin ist das Schutzfeld 17 durch eine vorgegebene Kontur bildende Schutzfeldgrenze 18 begrenzt.

Die Vorgabe der Schutzfeldgrenzen 18 erfolgt vorzugsweise während eines Einlernvorganges. Insbesondere können dabei die Schutzfeldgrenzen 18 von einer Umgebungskontur wie zum Beispiel Wänden, Maschinen oder sonstigen stationären Einrichtungen gebildet sein.

Zur Vorgabe der Schutzfeldgrenzen 18 wird für die einzelnen Ablenkpositionen der Sendelichtstrahlen 2, das heißt der jeweiligen aktuellen Scanwinkel ω innerhalb des Scanwinkelbereichs Ω, die Modulationsfrequenz zur Modulation der Sendelichtstrahlen 2 in geeigneter Weise eingestellt.

Im vorliegenden Fall sind die Schutzfeldgrenzen 18 durch eine Umgebungskontur von einer Maschine oder dergleichen vorgegeben. Für die einzelnen Ablenkpositionen wird dann durch Variation der Eingangsspannung U_{ME} der Modulationseinheit 9 die Modulationsfrequenz der Sendelichtstrahlen 2 so eingestellt, dass die Demodulationssignale U_{DME} jeweils einen vorgegebenen Wert annehmen, der zumindest näherungsweise einer Phasenverschiebung der Sendelichtstrahlen 2 und der Empfangslichtstrahlen 4 von 90° entspricht.

Um den Zeitaufwand dieser Einstellung in Grenzen zu halten, erfolgt die Einstellung der Modulationsfrequenz einheitlich in vorgegebenen Winkelsegmenten des Scanwinkelbereichs Ω.

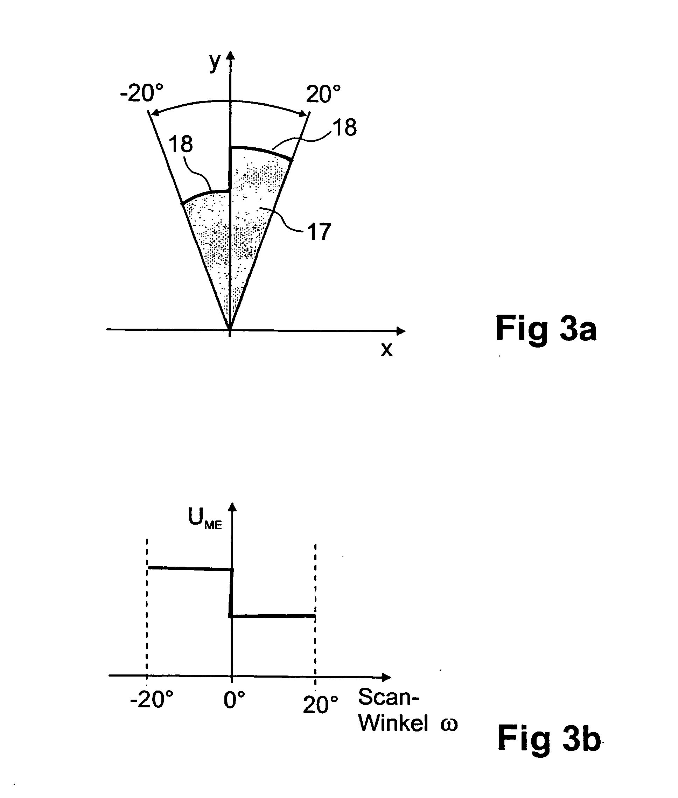

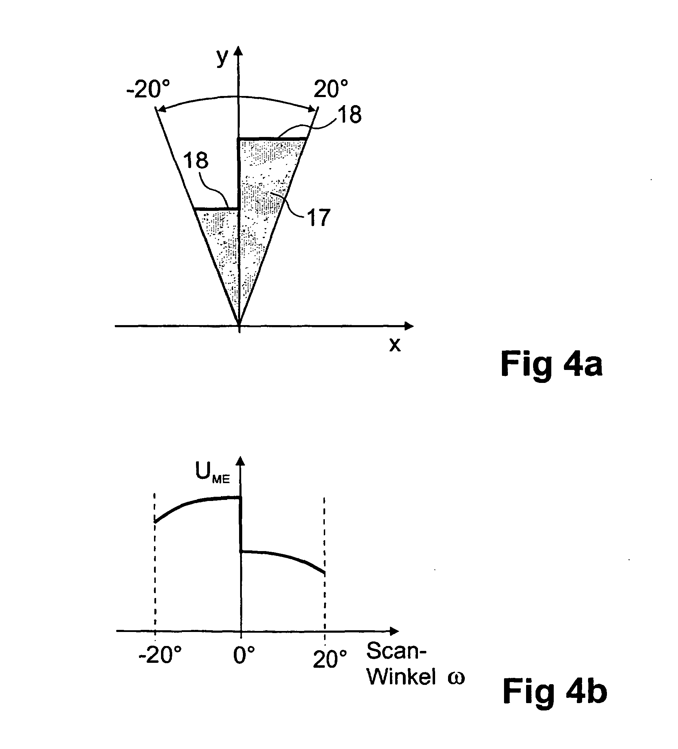

Die Figuren 3a, b und 4a, b zeigen schematisch zwei unterschiedliche Einstellmöglichkeiten. Der Einfachheit halber ist in diesen Figuren die Einstellung der Modulationsfrequenzen für den Fall erläutert, dass der Scanwinkelbereich Ω von -20° bis +20° in zwei symmetrische Winkelsegmente von -20° bis 0° beziehungsweise von 0° bis 20° aufgeteilt ist.

Bei dem Ausrührungsbeispiel gemäß Figur 3b wird innerhalb jedes Winkelsegments eine konstante Eingangsspannung U_{ME} für die Modulationseinheit 9 vorgegeben. Dadurch wird innerhalb jedes Winkelsegments wie aus Figur 3a ersichtlich ein konstanter Distanzwert zur optoelektronischen Vorrichtung 1 als Schutzfeldgrenze 18 erhalten.

Zur Modellierung geradliniger und gestufter Verläufe der Schutzfeldgrenzen 18 wie sie in Figur 4a dargestellt sind, ist es notwendig, dass die Eingangsspannung U_{ME} innerhalb des jeweiligen Winkelsegments wie in Figur 4b dargestellt in Abhängigkeit des Scanwinkels ω eine kontinuierlich variierende Funktion bildet.

Zur Objekterfassung werden die in der Demodulationseinheit generierten Demodulationssignale U_{DME} mit in der Schwellwerteinheit 16 generierten Schwellwerten S1, S2 verglichen. Im vorliegenden Fall werden in der Schwellwerteinheit 16 zwei eine Schalthysterese bildende Schwellwerte S1, S2 generiert.

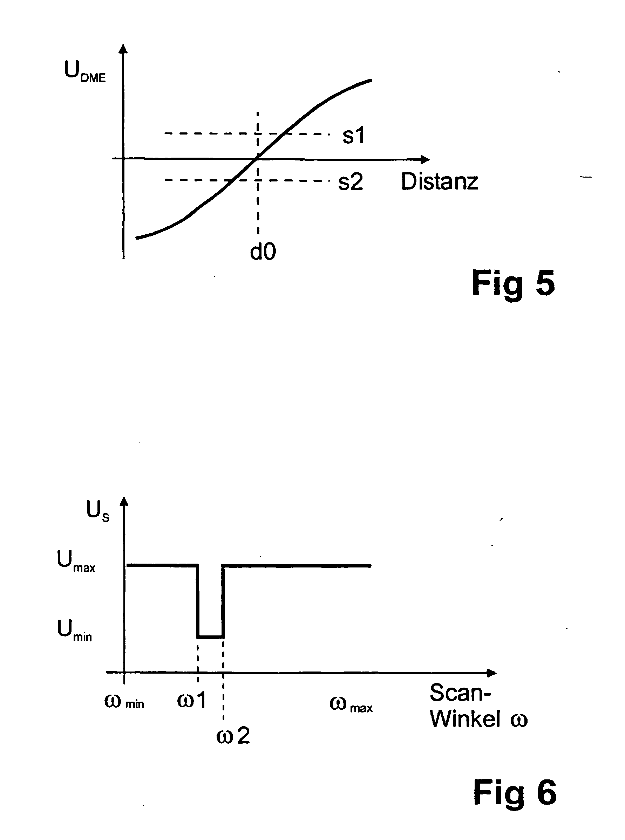

Die Schwellwerte S1 und S2 sowie der Signalverlauf des Demodulationssignals U_{DME} in Abhängigkeit der Distanz zur optoelektronischen Vorrichtung 1 sind in Figur 5 dargestellt.

Durch die Einstellung der Modulationsfrequenz in der Modulationseinheit 9 nimmt das Demodulationssignal U_{DME} an der Schutzfeldgrenze 18 bei d₀ den Wert null an. Bei Eintritt eines Objektes 7 in das Schutzfeld 17 werden die mit den Sendelichtstrahlen 2 erfassten Signalwerte zu geringeren Distanzwerten hin verschoben, das heißt das Demodulationssignal U_{DME} nimmt wie in Figur 5 dargestellt negative Werte an. Sobald das Demodulationssignal U_{DME} den Wert des Schwellwerts S2 unterschreitet, wird dies als ein Objekteingriff in das Schutzfeld 17 gewertet.

Der am Ausgang der Schwellwerteinheit 16 erhaltene Verlauf des digitalisierten Signals U_{S} ist in Figur 6 für die Anordnung gemäß Figur 2 dargestellt. Bei der Anordnung gemäß Figur 2 befindet sich ein einzelnes Objekt 7 innerhalb des Schutzfeldes 17. Demzufolge wird entsprechend der Position des Objektes 7 im Schutzfeld 17 wie in Figur 6 dargestellt im Winkelbereich zwischen ω₁ und ω₂ innerhalb des vom Winkelbereichs zwischen ωₘᵢₙ und ωₘₐₓ gebildeten Scanwinkelbereichs Ω eine Schutzfeldverletzung registriert, das heißt das Demodulationssignal U_{DME} liegt in diesem Bereich unterhalb des Schwellwerts S2, so dass das digitalisierte Signal U_{S} den Signalwert Uₘᵢₙ annimmt. Im restlichen Scanwinkelbereich Ω liegt keine Schutzfeldverletzung vor.

Im Microcontroller 10 wird anhand des eingelesenen digitalisierten Signals U_{S} das binäre Objektfeststellungssignals generiert, welches über den Schaltausgang 11 ausgebbar ist. Das Objektfeststellungssignal weist die Schaltzustände "freies Schutzfeld" und "Objekteingriff im Schutzfeld" auf.

Im einfachsten Fall nimmt das Objektfeststellungssignal bereits dann den Schaltzustand "Objekteingriff im Schutzfeld" ein, wenn innerhalb einer Abtastperiode, innerhalb derer die Sendelichtstrahlen 2 einmal den Scanwinkelbereich Ω überstreichen, wenigstens eine Schutzfeldverletzung registriert wird.

Alternativ nimmt das Objektfeststellungssignal erst dann den Schaltzustand "Objekteingriff im Schutzfeld" ein, wenn innerhalb mehrerer aufeinander folgender Abtastperioden eine Schutzfeldverletzung registriert wird.

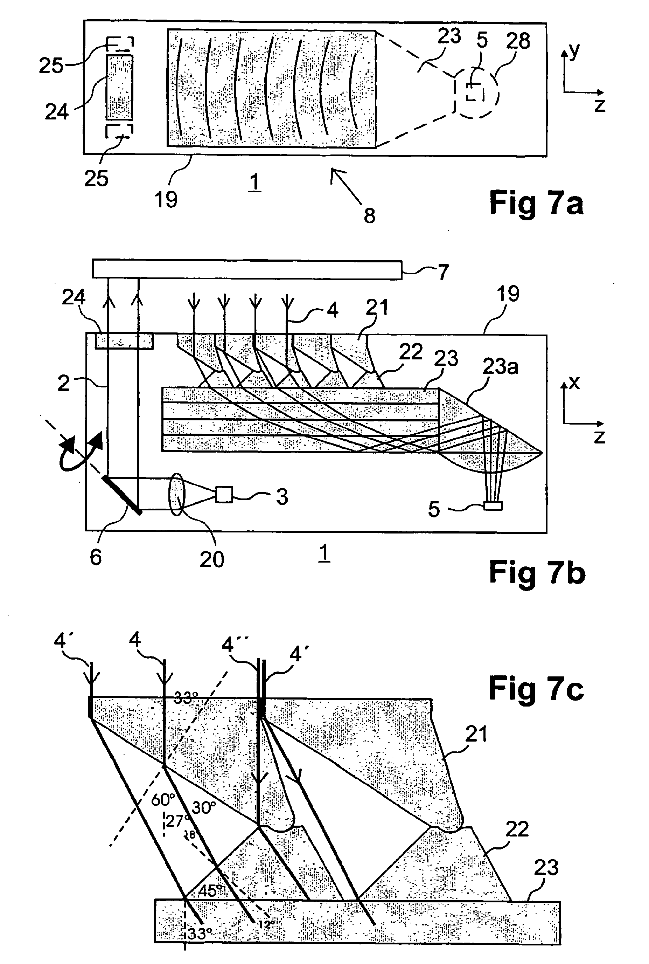

Die Figuren 7a - c zeigen ein Ausfuhrungsbeispiel der optoelektronischen Vorrichtung 1 mit einer vorteilhaften Anordnung von Optikkomponenten, welche im Gehäuse 19 der optoelektronischen Vorrichtung 1 integriert sind.

Dem Sender 3 ist zur Strahlformung der Sendelichtstrahlen 2 eine Kollimationslinse 20 nachgeordnet, welche eine Sendeoptik bildet.

Die Empfangsoptik 8 weist im vorliegenden Fall eine Anordnung von außenliegenden Prismenelementen 21, eine Anordnung von innenliegenden Prismenelementen 22 sowie eine Lichtleiterplatte 23 auf.

Die Rückseiten der außenliegenden Prismenelemente 21 bilden eine ebene Lichteintrittsfläche für die Empfangslichtstrahlen 4, wobei die Lichteintrittsfläche mit der Frontseite des Gehäuses 19 bündig abschließt. Die innenliegenden Prismenelemente 22 sitzen auf der Rückseite der Lichtleiterplatte 23 auf. Die innen- und außenliegenden Prismenelemente 21, 22 sind über ihre Spitzen verbunden. Im vorliegenden Fall bilden die Prisemenelemente 21, 22 eine bezüglich dem Empfänger 5 konzentrische Anordnung. Die Lichtleiterplatte 23 weist mehrere Schichten mit unterschiedlichen Brechungsindizes auf. Am hinteren Ende der Lichtleiterplatte 23 ist ein Umlenkelement mit einem Umlenkspiegel 23a vorgesehen.

Die Sendelichtstrahlen 2 gelangen vom Sender 3 über die Kollimationslinse 20 zu dem die Ablenkeinheit 6 bildenden Schwingspiegel. Der Schwingspiegel ist vorzugsweise 45° zu der optischen Achse des Senders 3 geneigt und lenkt die Sendelichtstrahlen 2 so ab, dass sie diese die optoelektronische Vorrichtung 1 durch ein Strahlaustrittsfenster 24 im Gehäuse 19 in y-Richtung verlassen. Durch die periodische Ablenkbewegung des Schwingspiegels werden die Sendelichtstrahlen 2 in der x-Richtung beispielsweise innerhalb eines Scanwinkelbereichs Ω von +/- 30° ausgelenkt. Durch die schräge Anordnung des Schwingspiegels ergibt sich eine leicht gebogene Abtastlinie auf dem zu erfassenden Objekt 7. Die vom Objekt 7 reflektierten Empfangslichtstrahlen 4 werden über die äußeren Prismenelemente 21, zu den darunter liegenden Prismenelementen 22 hin gebrochen. Die Prismenelemente 22 koppeln die Empfangslichtstrahlen 4 in die darunter liegende Lichtleiterplatte 23 ein. Dort werden die Empfangslichtstrahlen 4 durch die Schichten der Lichtleiterplatte 23 mit abnehmendem Brechungsindex weiter in die z-Richtung umgelenkt, an der untersten Grenzschicht der Lichtleiterplatte 23 durch Totalreflexion gespiegelt und schließlich über den stirnseitig angeordneten Umlenkspiegel 23a zum Empfänger 5 geführt.

Figur 7c zeigt den Strahlengang der Empfangslichtstrahlen 4 in den Prismenelementen 21, 22. Die Lichteintrittsfläche des Prismenelementes 21 bildet eine Planfläche in der x-z-Ebene und liegt parallel zur Lichtaustrittsfläche des Prismenelementes 21. Die brechenden Winkel sind bei einem Brechungsindex von ca. 1,58 für das Prismenelement 21 beispielsweise 33° und für das Prismenelement 22 beispielsweise 45°, so dass alle Empfangslichtstrahlen 4' bis 4" gleich gebrochen werden. Die zueinander gerichteten Spitzen der Prismenelemente 21 und 22 werden nicht für die Strahlführung benötigt und stehen als mechanische Auflagen zur Verfügung.

Wie aus Figur 7a ersichtlich schließen seitlich an das Lichtaustrittsfenster 24 zwei weitere Umlenkspiegel 25 an, welche jeweils Bestandteil eines Testobjektes zur Durchführung von zyklischen Referenzmessungen sind. Die Referenzmessungen dienen zur Referenzierung der Eingangsspannungen U_{ME} der Modulationseinheit 9.

Die über die Umlenkspiegel 25 geführten Sendelichtstrahlen 2 verlaufen außerhalb des Scanwinkelbereichs Ω, so dass die Objekterfassung durch die Referenzmessungen nicht beeinträchtigt wird.

Jedes Testobjekt weist neben dem jeweiligen Umlenkspiegel 25 weitere nicht dargestellte Umlenkmittel auf, über welche die Sendelichtstrahlen 2 vollständig innerhalb des Gehäuses 19 verlaufend entlang eines definierten Lichtweges zum Empfänger 5 geführt sind.

Eine Referenzmessung bildet einen Nulldistanzabgleich, bei welchem das erhaltene Demodulationssignal U_{DME} auf einen Sollwert abgeglichen wird. Dieser kann beispielsweise von einem der Schwellwerte S1 und S2 gebildet sein, die in der Schwellwerteinheit 16 generiert werden. Der Abgleich auf den Sollwert erfolgt dabei durch eine Änderung der Modulationsfrequenz in der Modulationseinheit 9.

Der Abgleich auf den Sollwert kann dabei nach dem Prinzip der Intervallschachtelung erfolgen.

Durch die bei den Referenzmessungen ermittelten Referenzwerte können die aktuellen Eingangsspannungen U_{ME} zur Generierung der Modulationsfrequenzen bei der Objekterfassung nachgeführt werden.

### Bezugszeichenliste

- (1): Optoelektronische Vorrichtung
- (2): Sendelichtstrahlen
- (3): Sender
- (4): Empfangslichtstrahlen
- (5): Empfänger
- (6): Ablenkeinheit
- (7): Objekt
- (8): Empfangsoptik
- (9): Modulationseinheit
- (10): Microcontroller
- (11): Schaltausgang
- (12): Serielle Schnittstelle
- (13): Verstärker
- (14): Synchrongleichrichter
- (15): Tiefpass
- (16): Schwellwerteinheit
- (17): Schutzfeld
- (18): Schutzfeldgrenze
- (19): Gehäuse
- (20): Kollimationslinse
- (21): Prismenelement (außen)
- (22): Prismenelement (innen)
- (23): Lichtleiterplatte
- (23a): Umlenkspiegel
- (24): Lichtaustrittsfenster
- (25): Umlenkspiegel
- d₀: Distanz
- S1: Schwellwert
- S2: Schwellwert
- U_{DME}: Demodulationssignale
- Uₘₐₓ: Signalwert
- U_{ME}: Eingangsspannung
- Uₘᵢₙ: Signalwert
- U_{S}: digitalisiertes Signal
- Ω: Scanwinkelbereich
- ω: Scanwinkel
- ωₘₐₓ: Scanwinkel
- ωₘᵢₙ: Scanwinkel
- ω₁: Scanwinkel
- ω₂: Scanwinkel

## Patentansprüche

1. Optoelektronische Vorrichtung (1) zur Erfassung von Objekten (7) innerhalb eines Schutzfeldes (17) mit einem Sendelichtstrahlen (2) emittierenden Sender (3), einem Empfangslichtstrahlen (4) empfangenden Empfänger (5), einer Ablenkeinheit (6) zur periodischen Ablenkung der Sendelichtstrahlen (2) innerhalb des Schutzfeldes (17) und einer Auswerteeinheit zur Generierung eines Objektfeststellungssignals in Abhängigkeit der Ausgangssignale des Empfängers (5), **dadurch gekennzeichnet, dass** eine Modulationseinheit (9) zur Modulation der Sendelichtstrahlen (2) mit einer Modulationsfrequenz und eine Demodulationssignale (U_{DME}) generierende Demodulationseinheit zur Ermittlung der Phasendifferenzen der Sendelichtstrahlen (2) und der Empfangslichtstrahlen (4) vorgesehen ist, wobei die Modulation der Sendelichtstrahlen (2) zur Vorgabe der Schutzfeldgrenzen abhängig von den Ablenkpositionen der Sendelichtstrahlen (2) so eingestellt ist, dass entlang der Schutzfeldgrenze jeweils eine bestimmte Phasendifferenz der Sendelichtstrahlen (2) und der Empfangsstrahlen (4) erhalten wird, wodurch ein vorgegebener Wert des in der Demodulationseinheit generierten Demodulationssignals erhalten wird, und wobei zur Generierung eines Objektfeststellungssignals bei Eintritt eines Objektes (7) in das Schutzfeld (17) Änderungen der Demodulationssignale (U_{DME}) bezüglich der den Schutzfeldgrenzen (18) entsprechenden Werte erfassbar sind.

2. Optoelektronische Vorrichtung nach Anspruch 1, **dadurch gekennzeichnet, dass** die Einstellung der Modulationsfrequenz derart erfolgt, dass im Bereich der Schutzfeldgrenze (18) die Phasendifferenzen der Sendelichtstrahlen (2) und Empfangslichtstrahlen (4) zumindest näherungsweise 90° betragen.

3. Optoelektronische Vorrichtung nach einem der Ansprüche 1 oder 2, **dadurch gekennzeichnet, dass** zur Bestimmung der Schutzfeldgrenzen (18) ein Einlernvorgang durchführbar ist.

4. Optoelektronische Vorrichtung nach einem der Ansprüche 1-3, **dadurch gekennzeichnet, dass** die Schutzfeldgrenzen (18) von einer Umgebungskontur gebildet sind.

5. Optoelektronische Vorrichtung nach Anspruch 1**-**4**, dadurch gekennzeichnet, dass** in der Auswerteeinheit zur Generierung des Objektfeststellungssignals eine Schwellwerteinheit (16) vorgesehen ist, mittels derer die Demodulationssignale (U_{DME}) bewertet werden.

6. Optoelektronische Vorrichtung nach Anspruch 5, **dadurch gekennzeichnet, dass** in der Schwellwerteinheit (16) zwei eine Schalthysterese bildende Schwellwerte (S1, S2) generiert werden.

7. Optoelektronische Vorrichtung nach Anspruch 1-6, **dadurch gekennzeichnet, dass** die Modulationseinheit (9) von einem spannungsgeregelten Oszillator gebildet ist.

8. Optoelektronische Vorrichtung nach einem der Ansprüche 1 - 6, **dadurch gekennzeichnet, dass** die Modulationseinheit (9) von einem Synthesizer gebildet ist.

9. Optoelektronische Vorrichtung nach einem der Ansprüche 7 - 8, **dadurch gekennzeichnet, dass** die Einstellung der Modulationsfrequenz durch Änderung der Eingangsspannung (UM_{E}) der Modulationseinheit (9) über die Auswerteeinheit erfolgt.

10. Optoelektronische Vorrichtung nach einem der Ansprüche 1 **-** 9**, dadurch gekennzeichnet, dass** die Demodulationseinheit von einem Synchrongleichrichter (14) gebildet ist.

11. Optoelektronische Vorrichtung nach einem der Ansprüche 1 - 10, **dadurch gekennzeichnet, dass** die Ablenkeinheit (6) einen Schwingspiegel aufweist, über welchen nur die Sendelichtstrahlen (2) geführt sind.

12. Optoelektronische Vorrichtung nach Anspruch 11, **dadurch gekennzeichnet, dass** in Abstand zum Schwingspiegel eine Empfangsoptik (8) ortsfest angeordnet ist, über welche die aus dem Bereich des Schutzfeldes (17) zurückreflektierten Empfangslichtstrahlen (4) zum Empfänger (5) geführt sind.

13. Optoelektronische Vorrichtung nach Anspruch 12, **dadurch gekennzeichnet, dass** die Empfangsoptik (8) von einer Linse gebildet ist.

14. Optoelektronische Vorrichtung nach Anspruch 12, **dadurch gekennzeichnet, dass** die Empfangsoptik (8) eine Anordnung von Prismenelementen (21, 22) sowie eine Lichtleiterplatte (23) aufweist, wobei die aus dem Bereich des Schutzfeldes (17) zurückreflektierten Empfangslichtstrahlen (4) mittels der Prismenelemente (21, 22) umgelenkt und in die Lichtleiterplatte (23) eingekoppelt werden, und dass die Empfangslichtstrahlen (4) in der Lichtleiterplatte (23) verlaufend zum Empfänger (5) geführt werden.

15. Optoelektronische Vorrichtung nach einem der Ansprüche 1 - 14, **dadurch gekennzeichnet, dass** diese wenigstens ein geräteintemes Testobjekt aufweist, wobei zur Durchführung einer Referenzmessung außerhalb des Schutzfeldes (17) geführte Sendelichtstrahlen (2) über das Testobjekt zum Empfänger (5) geführt sind.

16. Optoelektronische Vorrichtung nach Anspruch 15, **dadurch gekennzeichnet, dass** die Referenzmessungen zyklisch durchgeführt werden.

17. Optoelektronische Vorrichtung nach einem der Ansprüche 15 oder 16, **dadurch gekennzeichnet, dass** mittels der Referenzmessungen einer Referenzierung der Eingangsspannung (U_{ME}) der Modulationseinheit (9) erfolgt.

## Claims

1. Optoelectronic device (1) for detecting objects (7) within a protection field (17), comprising a transmitter (3) transmitting transmitted light beams (2), a receiver (5) receiving received light beams (4), a deflecting unit (6) for periodic deflection of the transmitted light beams (2) within the protection field (17) and an evaluating unit for generating an object detection signal in dependence on the output signals of the receiver (5), **characterised in that** a modulation unit (9) for modulation of the transmitted light beams (2) by a modulation frequency and a demodulation unit, which generates demodulation signals (U_{DME}), for ascertaining the phase differences of the transmitted light beams (2) and the received light beams (4) is provided, wherein for presetting the protection field boundaries the modulation of the transmitted light beams (2) is so set in dependence on the deflection positions of the transmitted light beams (2) that a defined phase difference of the transmitted light beams (2) and the received light beams (4) is obtained each time along the protection field boundary, whereby a predetermined value of the demodulation signal generated in the demodulation unit is obtained, and wherein for generation of an object detection signal on entry of an object (7) into the protection field (17) changes of the demodulation signal (U_{DME}) with respect to the values corresponding with the protection field boundaries (18) are detectable.

2. Optoelectronic device according to claim 1, **characterised in that** the setting of the modulation frequency is carried out in such a manner that in the region of the protection field boundary (18) the phase differences of the transmitted light beams (2) and received light beams (4) are at least approximately 90°.

3. Optoelectronic device according to one of claims 1 and 2, **characterised in that** a learning process can be carried out for determination of the protection field boundaries (18).

4. Optoelectronic device according to any one of claims 1 to 3, **characterised in that** the protection field boundaries (18) are formed by an environment contour.

5. Optoelectronic device according to claims 1 to 4, **characterised in that** a threshold value unit (16) by means of which the demodulation signals (U_{DME}) are evaluated is provided in the evaluating unit for generation of the object detection signal.

6. Optoelectronic device according to claim 5, **characterised in that** two threshold values (S1, S2) forming a switching hysteresis are generated in the threshold value unit (16).

7. Optoelectronic device according to claims 1 to 6, **characterised in that** the modulation unit (9) is formed by a voltage-regulated oscillator.

8. Optoelectronic device according to any one of claims 1 to 6, **characterised in that** the modulation unit (9) is formed by a synthesiser.

9. Optoelectronic device according to either one of claims 7 and 8, **characterised in that** the setting of the modulation frequency is carried out by changing the input voltage (U_{ME}) of the modulation unit (9) by way of the evaluating unit.

10. Optoelectronic device according to any one of claims 1 to 9, **characterised in that** the demodulation unit is formed by a synchronous rectifier (14).

11. Optoelectronic device according to any one of claims 1 to 10, **characterised in that** the deflecting unit (6) comprises a pivot mirror by way of which only the transmitted light beams (2) are guided.

12. Optoelectronic device according to claim 11, **characterised in that** a receiving optical system (8) by way of which the received light beams (4) reflected back from the region of the protection field (17) are guided to the receiver (5) is arranged at a spacing from the pivot mirror.

13. Optoelectronic device according to claim 12, **characterised in that** the receiving optical system (8) is formed by a lens.

14. Optoelectronic device according to claim 12, **characterised in that** the receiving optical system (8) comprises an arrangement of prism elements (21, 22) as well as an optical waveguide plate (23), wherein the received light beams (4) reflected back from the region of the protection field (17) are diverted by means of the prism elements (21, 22) and coupled into the optical waveguide plate (23) and that the received light beams (4) are guided, running in the optical waveguide plate (23), to the receiver (5).

15. Optoelectronic device according to any one of claims 1 to 14, **characterised in that** this comprises at least one test object internal to the apparatus, wherein, for carrying out a reference measurement, transmitted light beams (2) guided outside the protection field (17) are guided by way of the test object to the receiver (5).

16. Optoelectronic device according to claim 15, **characterised in that** the reference measurements are carried out cyclically.

17. Optoelectronic device according to either one of claims 15 and 16, **characterised in that** a referencing of the input voltage (U_{ME}) of the modulation unit (9) is carried out by means of the reference measurements.

## Revendications

1. Dispositif optoélectronique (1) pour détecter des objets (7) à l'intérieur d'une zone protégée (17), avec un émetteur (3) émettant des rayons lumineux d'émission (2), un récepteur (5) recevant des rayons lumineux de réception (4), une unité de déviation (6) pour dévier périodiquement les rayons lumineux d'émission (2) à l'intérieur de la zone protégée (17) et une unité d'évaluation pour générer un signal de détection d'objet en fonction des signaux de sortie du récepteur (5), **caractérisé en ce qu'**il est prévu une unité de modulation (9) pour moduler les rayons lumineux d'émission (2) avec une fréquence de modulation et une unité de démodulation générant des signaux de démodulation (U_{DME}) pour déterminer les différences de phase des rayons lumineux d'émission (2) et des rayons lumineux de réception (4), la modulation des rayons lumineux d'émission (2) étant réglée, pour prédéfinir les limites de zone protégée (18), en fonction des positions de déviation des rayons lumineux d'émission (2) de façon que l'on obtienne le long de la limite de zone protégée chaque fois une certaine différence de phase des rayons lumineux d'émission (2) et des rayons lumineux de réception (4), par laquelle on obtient une valeur prédéfinie du signal de démodulation généré dans l'unité de démodulation, et, pour générer un signal de détection d'objet en cas d'entrée d'un objet (7) dans la zone protégée (17), des modifications des signaux de démodulation (U_{DME}) par rapport aux valeurs correspondant aux limites de zone protégée (18) pouvant être détectées.

2. Dispositif optoélectronique selon la revendication 1, **caractérisé en ce que** le réglage de la fréquence de modulation s'effectue de manière que dans la zone de la limite de zone protégée (18), les différences de phase des rayons lumineux d'émission (2) et des rayons lumineux de réception (4) soient approximativement de 90°.

3. Dispositif optoélectronique selon l'une des revendications 1 ou 2, **caractérisé en ce que**, pour déterminer les limites de zone protégée (18), un processus d'apprentissage peut être effectué.

4. Dispositif optoélectronique selon l'une des revendications 1 à 3, **caractérisé en ce que** les limites de zone protégée (18) sont formées par un contour d'environnement.

5. Dispositif optoélectronique selon les revendications 1 à 4, **caractérisé en ce qu'**il est prévu dans l'unité d'évaluation, pour générer le signal de détection d'objet, une unité à valeur seuil (16) au moyen de laquelle les signaux de démodulation (U_{DME}) sont évalués.

6. Dispositif optoélectronique selon la revendication 5, **caractérisé en ce que** deux valeurs seuils (S1, S2) formant une hystérésis de commutation sont générées dans l'unité à valeur seuil (16).

7. Dispositif optoélectronique selon les revendications 1 à 6, **caractérisé en ce que** l'unité de modulation (9) est formée par un oscillateur commandé en tension.

8. Dispositif optoélectronique selon l'une des revendications 1 à 6, **caractérisé en ce que** l'unité de modulation (9) est formée par un synthétiseur.

9. Dispositif optoélectronique selon l'une des revendications 7 à 8, **caractérisé en ce que** le réglage de la fréquence de modulation s'effectue par modification de la tension d'entrée (U_{ME}) de l'unité de modulation (9) par l'intermédiaire de l'unité d'évaluation.

10. Dispositif optoélectronique selon l'une des revendications 1 à 9, **caractérisé en ce que** l'unité de démodulation est formée par un redresseur synchrone (14).

11. Dispositif optoélectronique selon l'une des revendications 1 à 10, **caractérisé en ce que** l'unité de déviation (6) présente un miroir oscillant par l'intermédiaire duquel seuls les rayons lumineux d'émission (2) sont guidés.

12. Dispositif optoélectronique selon la revendication 11, **caractérisé en ce qu'**à distance du miroir oscillant est disposée à poste fixe une optique de réception (8) par l'intermédiaire de laquelle les rayons lumineux de réception (4) réfléchis en retour à partir de la région de la zone protégée (17) sont guidés vers le récepteur (5).

13. Dispositif optoélectronique selon la revendication 12, **caractérisé en ce que** l'optique de réception (8) est formée par une lentille.

14. Dispositif optoélectronique selon la revendication 12, **caractérisé en ce que** l'optique de réception (8) présente un agencement d'éléments prismatiques (21, 22) ainsi qu'une plaque conductrice de lumière (23), les rayons lumineux de réception (4) réfléchis en retour à partir de la région de la zone protégée (17) étant déviés au moyen des éléments prismatiques (21, 22) et couplés dans la plaque conductrice de lumière (23), et que les rayons lumineux de réception (4) sont guidés vers le récepteur (5) en passant dans la plaque conductrice de lumière (23).

15. Dispositif optoélectronique selon l'une des revendications 1 à 14, **caractérisé en ce que** celui-ci présente au moins un objet de test interne à l'appareil, des rayons lumineux d'émission (2) guidés à l'extérieur de la zone protégée (17) étant guidés vers le récepteur (5) en passant par l'objet de test pour effectuer une mesure de référence.

16. Dispositif optoélectronique selon la revendication 15, **caractérisé en ce que** les mesures de référence sont effectuées cycliquement.

17. Dispositif optoélectronique selon l'une des revendications 15 ou 16, **caractérisé en ce qu'**un référencement de la tension d'entrée (U_{ME}) de l'unité de modulation (9) est réalisé au moyen des mesures de référence.
